# EUROPEAN PATENT APPLICATION

(11) **EP 3 616 534 A1**
(43) Date of publication of application: **04.03.2020**
(21) Application number: 19189986.3
(22) Date of filing: 05.08.2019
(51) Int. Cl.: A23P 20/10

(54) **CHICKPEA FLOUR-BASED COMPOSITION**

(30) Priority: 28.08.2018 ES 201831314 U
(71) Applicant: Fernández Toledo, Purificación, 46111 Rocafort Valencia (ES)
(72) Inventor: Fernández Toledo, Purificación, 46111 Rocafort Valencia (ES)
(74) Representative: Ungria López, Javier

(57) **Abstract**

The present invention relates to a food composition for battering food comprising from 72 to 93% of cereal flour; from 1.3 to 3.8% of milk powder; from 0.6 to 4.6% of egg; and from 0.9 to 11.4% of salt; characterised in that it additionally comprises from 5 to 10% of chickpea-flour, percentages expressed by weight with respect to the total weight of the composition. Likewise, the invention relates to the use of the composition for battering a food product.

## Description

### SECTOR OF THE ART

The present invention falls within the food industry. More particularly, it relates to a chickpea flour-based food composition, as well as the use thereof for battering food.

### BACKGROUND OF THE INVENTION

The state of the art closest to the present invention is the patent application with publication number ES 2275375. This application relates to a cereal flour-based food composition comprising 1 kg of cereal flour, from 15 to 50 g of milk powder, from 7.5 to 60 g of egg, from 10 to 150 g of salt and from 0 to 120 g of spices.

As described in said patent application, there is a large demand in the market for prepared or semi-prepared products, and in particular for battered foods that are ready to be cooked by consumers both on an individual and on an industrial level. Although the composition described in application ES2275375 had various advantages over the compositions available in the state of the art, the present invention relates to a new food composition for battering food characterised in that it is revolutionary with regards to the compositions available on the market for battering food products. Although there are alternatives available in the state of the art, to date there is no known composition with the texture and nutritional properties of the composition object of the invention. In particular, a formulation with optimal properties for battering food products has been achieved, with the advantage of preventing the use of industrial additives which are usually used to achieve the desired effects in terms of the degree of compaction of the batter, the uniformity or the crunchy texture thereof.

Additionally, the new composition has the advantage of providing a high nutritional value for the batter of the food product, which is not common in batters usually available in the market.

### DESCRIPTION OF THE INVENTION

The present invention relates to a new food composition for battering food comprising, in percentage by weight with respect to the total weight of the composition:
- from 72 to 93% and preferably 76 to 87% of cereal flour, preferably selected from a group consisting of wheat flour, corn flour and rye flour, as well as any of the combinations thereof;
- from 1.3 to 3.8% and preferably from 1.4 to 3.6% of milk powder;
- from 0.6 to 4.6% and preferably from 0.7 to 4.3% of egg, preferably in lyophilised (dehydrated) or pasteurised form; and
- from 0.9 to 11.4% and preferably from 1 to 10% of salt;
characterised in that it additionally comprises from 5 to 10% of chickpea-flour, expressed by weight with respect to the total weight of the composition.

In a preferred embodiment of the invention, the composition may additionally comprise spices, preferably in an amount less than or equal to 11% by weight of the total weight of the composition. The type of spice used in the composition will not be limiting, any spice for culinary use being able to be used, such as oregano, pepper, peppermint, paprika, coriander, rosemary, thyme, cayenne, clove, garlic, bay leaf, onion, parsley, etc., as well as any of the combinations thereof.

It has been demonstrated that the chickpea flour-based batter provides an optimal finishing for the food, acquiring a crunchy texture and an attractive toasted colour after it is cooked. Furthermore, the good adherence thereof to the food has been demonstrated, which favours cooking without batter being lost, thus preventing an unwanted burnt taste. This in turn reduces the need to change the oil used in the cooking, with the consequent reduction in the costs associated with the oil used in the process.

The composition object of the invention therefore has various advantages over other compositions of the state of the art, since it enables a batter to be obtained that has an optimal texture, and is more uniform and crunchy once it is cooked. Likewise, it prevents the need to use the additives that are usually used in industrial batters to achieve the same effects.

Additionally, unlike other alternative compositions of the state of the art, it has the advantage of providing a final product with optimal nutritional qualities. In particular, in addition to providing the food product with an optimal flavour, it has an extra contribution of vitamins and nutrients.

Likewise, an object of the invention is the use of said food composition for battering all kinds of food products such as meats, fish, vegetables, green vegetables and, in general, any prepared or semi-prepared product that is served battered. It should be noted that the battering of the food product can be carried out in a conventional manner, using any type of oil suitable for this purpose such as olive oil, sunflower oil, seed oil, etc.

### PREFERRED EMBODIMENT OF THE INVENTION

In a preferred embodiment object of the invention, a chickpea flour with the following nutritional qualities was used, wherein the percentages are with respect to the recommended daily amount for adults:

| | |
|---|---|
| Carbohydrates | 62.95 g |
| Sugars | 10.70 g |
| Dietary fibre | 12.20 g |
| Fats | 6.04 g |
| Proteins | 20.47 g |
| Water | 7.68 g |
| Thiamine (vitamin B₁) | 0.477 mg (37%) |
| Riboflavin (vitamin B₂) | 0.212 mg (14%) |
| Niacin (vitamin B₃) | 1.541 mg (10%) |
| Vitamin B₆ | 0.535 mg (41%) |
| Vitamin C | 4.0 mg (7%) |
| Vitamin E | 0.82 mg (5%) |
| Vitamin K | 9.0 µg (9%) |
| Calcium | 57 mg (6%) |
| Iron | 4.31 mg (34%) |
| Magnesium | 79 mg (21%) |
| Phosphorus | 252 mg (36%) |
| Potassium | 718 mg (15%) |
| Sodium | 24 mg (2%) |
| Zinc | 2.76 mg (28%) |

55.5 g of the previously described chickpea flour were mixed with:
- 1 kg of wheat flour;
- 22.2 g of milk powder;
- 22.2 g of pasteurised egg; and
- 11.1 g of salt.

Once the different components were mixed, a batter for a food product was then prepared, in particular, for chicken cut into pieces. After battering the pieces, they were then fried in olive oil, checking how the batter acquired an attractive golden hue, as well as a crunchy texture and a firm and uniform coating.

## Claims

1. A food composition for battering food comprising, in percentage by weight with respect to the total weight of the composition:
• from 72 to 93% of cereal flour;
• from 1.3 to 3.8% of milk powder;
• from 0.6 to 4.6% of egg; and
• from 0.9 to 11.4% of salt;
**characterised in that** it additionally comprises from 5 to 10% of chickpea-flour, expressed by weight with respect to the total weight of the composition.

2. The composition according to claim 1, wherein the cereal flour is selected from a group consisting of wheat flour, corn flour and rye flour, as well as any of the combinations thereof.

3. The composition according to claim 1 or 2, wherein the egg is lyophilised or pasteurised egg.

4. The composition according to any one of the previous claims, **characterised in that** it additionally comprises spices in a percentage less than 11% by weight with respect to the total weight of the composition.

5. The composition according to claim 4, wherein the spices are selected from a group consisting of oregano, pepper, peppermint, paprika, coriander, rosemary, thyme, cayenne, clove, garlic, bay leaf, onion and parsley, as well as any of the combinations thereof.

6. A use of a composition according to any one of claims 1 to 5 for battering a food product.
